# EUROPÄISCHE PATENTSCHRIFT

(11) **EP 1 425 513 B1**
(45) Veröffentlichungstag und Bekanntmachung des Hinweises auf die Patenterteilung: **24.08.2005**
(21) Anmeldenummer: 01967071.0
(22) Anmeldetag: 06.09.2001
(51) Int. Cl.: F16B 21/09, B60R 11/00, B60R 21/01, B60R 16/02

(54) **SENSORVORRICHTUNG UND BERFAHREN ZUM ANORDNEN EINER SENSORVORRICHTUNG AUF EINER MONTAGEPLATTE**
SENSOR DEVICE AND METHOD FOR ARRANGING A SENSOR DEVICE ON A MOUNTING PLATE
DISPOSITIF DE DETECTION ET PROCEDE POUR PLACER UN DISPOSITIF DE DETECTION SUR UNE PLAQUE DE MONTAGE

(43) Veröffentlichungstag der Anmeldung: 09.06.2004
(73) Patentinhaber: SIEMENS AKTIENGESELLSCHAFT, 80333 München (DE)
(72) Erfinder: MARKUS, Christopher, 93055 Regensburg (DE); PLANKL, Christian, 93055 Burgweinting (DE)
(86) Internationale Anmeldenummer: PCT/DE2001/003430
(87) Internationale Veröffentlichungsnummer: WO 2003/027515

(56) Entgegenhaltungen:
- EP-A- 0 987 447
- WO-A-00/47451
- US-A- 5 950 973

## Beschreibung

Die vorliegende Erfindung betrifft eine Sensorvorrichtung und ein Verfahren zum Anordnen einer Sensorvorrichtung auf einer Montageplatte eines Kraftfahrzeuges.

Airbag- und Gurtstraffereinheiten sind wichtige Insassenrückhaltemittel zum Schutz von Kraftfahrzeuginsassen bei einem frontalen oder seitlichen Aufprallunfall. Für die Entscheidung einer Auslösung der Airbag- oder Gurtstraffereinheit werden die Signale von Sensorvorrichtungen verwendet. Insbesondere Beschleunigungs-Sensorvorrichtungen werden dabei zentral im Airbagsteuergerät oder dezentral an anderer Stelle im Fahrzeug angebracht. Als zentral gilt hier insbesondere die Position im Gehäuse eines Airbagsteuergeräts, das üblicherweise unter der Mittelkonsole im Kraftfahrzeug angebracht ist. Folglich bezeichnet man als dezentral oder extern jede Anbringung einer Steuer- oder Sensorvorrichtung außerhalb des Airbagsteuergerätes. Dezentrale Sensorvorrichtungen werden deshalb oft als Airbagsatelliten oder schlicht als Satelliten bezeichnet.

Besonders bei Beschleunigungs-Sensorvorrichtungen ist es wichtig, eine mechanisch sehr starre Kopplung des Airbagsatelliten mit der Fahrzeugkarosserie zu erreichen. Besteht diese nicht, verändert sich die mechanische Übertragungsfunktion zwischen Satellit und Fahrzeugkarosserie und der Satellit sendet teilweise verfälschte Signale.
Zur Montage von externen Airbagsteuergeräten werden im Kraftfahrzeug zumeist metallische Montageplatten angebracht, auf denen die Satelliten mittels Schrauben und Gegenschrauben starr befestigt werden.

Die Sensorsignale werden in den Airbagsatelliten selbst oder im zentralen Airbagsteuergerät von Algorithmen ausgewertet, die für jeden Fahrzeugtyp angepasst werden müssen. Die Rechenergebnisse der Algorithmen sind dabei für unterschiedliche Einbauorte mitunter sehr verschieden. Gerade bei Beschleunigungs-Sensorvorrichtungen ist es daher besonders wichtig, die Airbagsatelliten reproduzierbar an der gleichen Stelle der Fahrzeugkarosserie zu montieren, da nur so die gleiche Bewertung eines Aufprallereignisses für alle Fahrzeuge einer Fahrzeuglinie gewährleistet werden kann. Deshalb werden in der Automobilindustrie spezielle Montagehilfen und Montageverfahren in der Fertigung eingesetzt, die eine falsche Positionierung eines Airbagsatelliten verhindern. Aus der WO 00/47451 ist eine Montagehilfe der gattungsgemäßen Art bekannt.

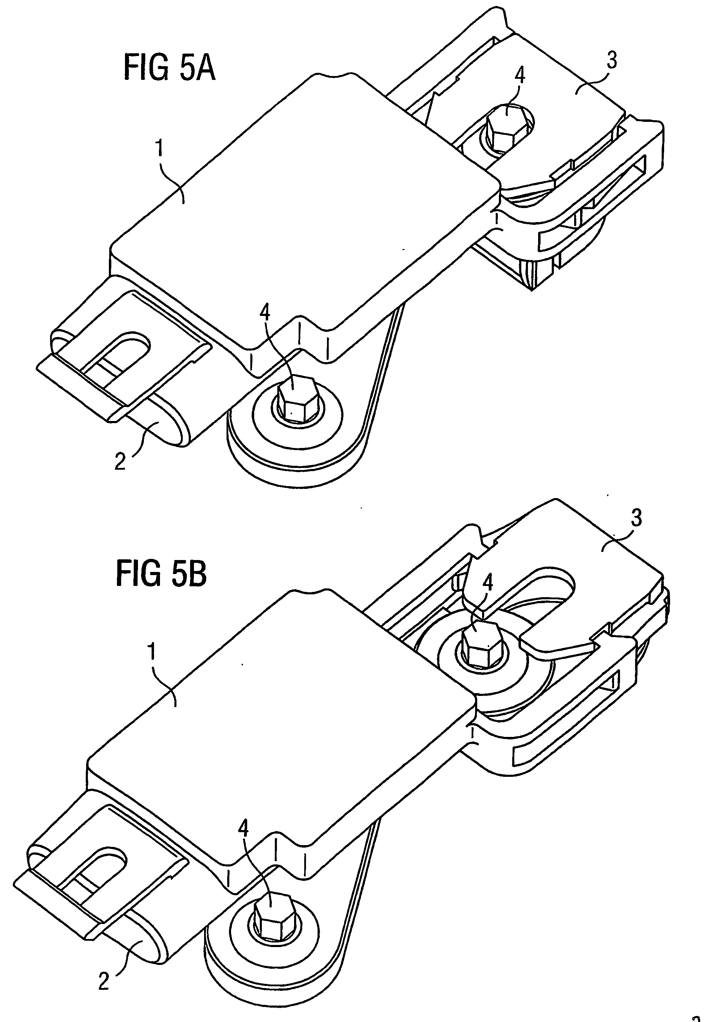

Figuren 5a und 5b stellen eine bekannte Montagehilfe in Form einer Montagekappe 3 dar, die auf ein Gehäuse 1 eines Airbagsatelliten gesteckt wird. Abbildung 5a zeigt den Airbagsatelliten vor dem Einbau im Kraftfahrzeug. In dieser Anordnung können die Befestigungsschrauben 4 nicht angezogen werden, da die Montagekappe den Zugriff mit einem Montagewerkzeug verhindert. Erst in der dafür vorgesehenen Einbauposition gemäß Figur 5b kann der Satellit an einer Montagehalterung befestigt werden.

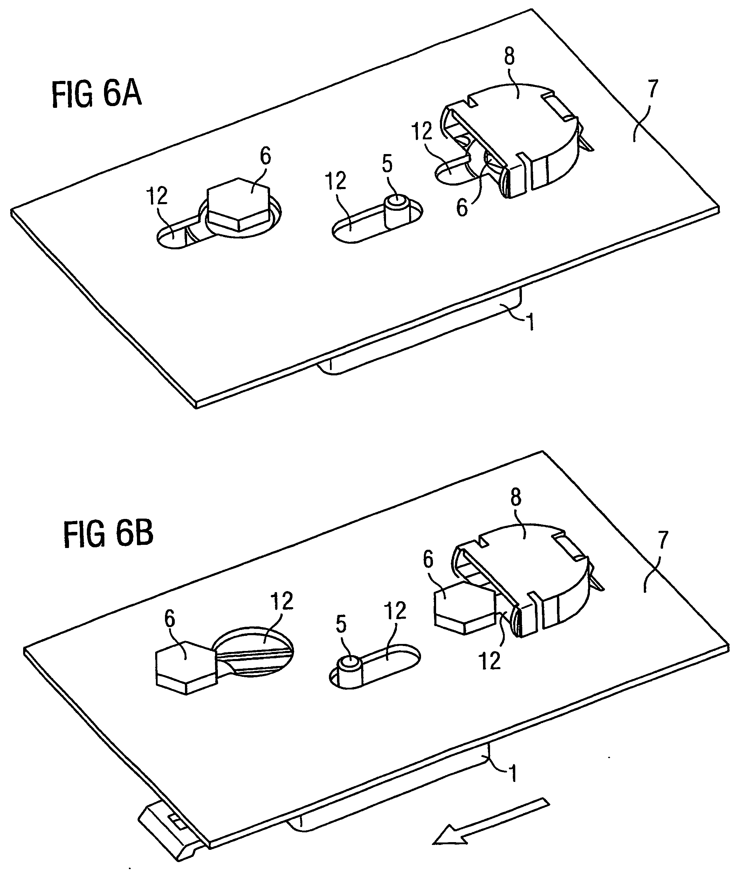

Figuren 6a und 6b stellen dieselben beiden Anordnungen des Satelliten in dessen Rückansicht auf einer Montageplatte 7 dar.

Die beiden Figuren 6a und 6b veranschaulichen das bekannte Verfahren zum Montieren eines Airbagsatelliten:
- Das Gehäuse 1 wird auf eine Montageplatte 7 unter Verwendung einer Positionierungshilfe 8 aufgebracht (Figur 6a).
- Das Gehäuse 1 des Satelliten wird nun in Pfeilrichtung bewegt (Figur 6b).
- Die Befestigung des Satelliten an der Montageplatte 7 erfolgt nun durch das Zusammenwirken von Montagemitteln.

Ein Nachteil dieser bekannten Montagehilfe ist die zweiteilige Ausformung von Gehäuse und dem Montage-Hilfsmittel, insbesondere einer Montagekappe. Mit der Verwendung von zwei getrennten Komponenten geht in der Fertigung eines Airbagsatelliten ein hoher logistischer Mehraufwand einher. Dieser besteht sowohl in der Handhabung einer größeren Anzahl von Bauteilen als auch in einem zusätzlichen Arbeitsschritt, in dem ein Gehäuse und eine Montagekappe zusammengefügt werden müssen.

Aufgabe der Erfindung ist, eine reproduzierbare Positionierung eines Airbagsatelliten in einem Kraftfahrzeug mit verwendungsgemäß hoher Positioniergenauigkeit zu ermöglichen. Diese Aufgabe wird mit den Merkmalen des Anspruches 1 gelöst.

Die erfindungsgemäße Sensorvorrichtung enthält dabei neben ihrem Gehäuse ein Federelement mit einem daran angeordnetem Führungselement, die beide zusammen die bekannte Montagekappe ersetzen.

Ein Führungselement bezeichnet dabei jede Bauform, die in ein Führungsmittel eingreifen kann, insbesondere ein Zapfen in eine durchgängige Aussparung einer Montageplatte.

Andererseits kann das Führungselement umgekehrt auch derart ausgestaltet sein, dass bei der Montage ein Führungsmittel der Montageplatte in die Aussparung der Sensorvorrichtung eingreift, insbesondere ein Zapfen der Montageplatte in eine Vertiefung im Gehäuse.

Eine Sensorvorrichtung mit einem Führungselement auf einer Montageplatte nach einer der beiden vorgeschlagenen Ausführungen kann vorzugsweise nur in der Richtung bewegt werden, die durch das Führungsmittel vorgegeben ist.

Eine vorteilhafte Weiterbildung der Erfindung ist dieses Federelement mit seinem Führungselement als ein Teil des Gehäuses, insbesondere eines Gehäuses aus Kunststoff oder Metall. Der beschriebene Nachteil der Montagekappe kann mit der erfindungsgemäßen Lösung der Aufgabe vermieden werden. Gegenüber der Herstellung einer Sensorvorrichtung mit einer Montagehilfe aus zwei Teilen wird die Fertigung wesentlich vereinfacht.

Ausgestaltungen und Weiterbildungen des Erfindungsgedankens sind Gegenstand der Unteransprüche.

Die erfindungsgemäße Ausformung der Sensorvorrichtung ermöglicht ein einfaches Verfahren zum Anordnen einer Sensorvorrichtung auf einer Montageplatte, dargelegt in dem unabhängigen Verfahrensanspruch 6.

Ausführungsbeispiele der Erfindung werden im folgenden anhand schematischer Zeichnungen näher erläutert. Es zeigen:
- Figuren 1a und 1b: eine erfindungsgemäße Sensorvorrichtung in perspektivischer Ansicht von zwei Seiten,
- Figuren 2a und 2b: die Sensorvorrichtung nach den Figuren 1a und 1b auf einer Montageplatte in einer Ausgangsposition beziehungsweise einer Endposition,
- Figuren 3a und 3b: die Sensorvorrichtung nach den Figuren 2a und 2b aus einer anderen Blickrichtung,
- Figur 4: eine erfindungsgemäße Sensorvorrichtung auf einer Montageplatte mit einer alternativen Ausformung des Führungsmittels für ein erleichtertes Verfahren zum Bewegen des Satelliten in die Einbauposition,
- Figuren 5a und 5b: eine bekannte Sensorvorrichtung mit einer Montagekappe in perspektivischer Ansicht in einer Ausgangsposition und in einer Einbauposition,
- Figuren 6a und 6b: die bekannte Sensorvorrichtung nach den Figuren 5a und 5b aus einer anderen Blickrichtung und
- Figur 7: eine erfindungsgemäße Sensorvorrichtung auf einer Montageplatte mit einem an der Montageplatte angeordneten Federelement für ein alternatives Verfahren zum Einrasten des Satelliten in der Einbauposition.

Gleiche Elemente und Bauteile der Ausführungsbeispiele werden in den folgenden Figuren durch die gleichen Bezugszeichen gekennzeichnet.

Die Sensorvorrichtung wird im folgenden auch als Airbagsatellit oder Satellit bezeichnet.

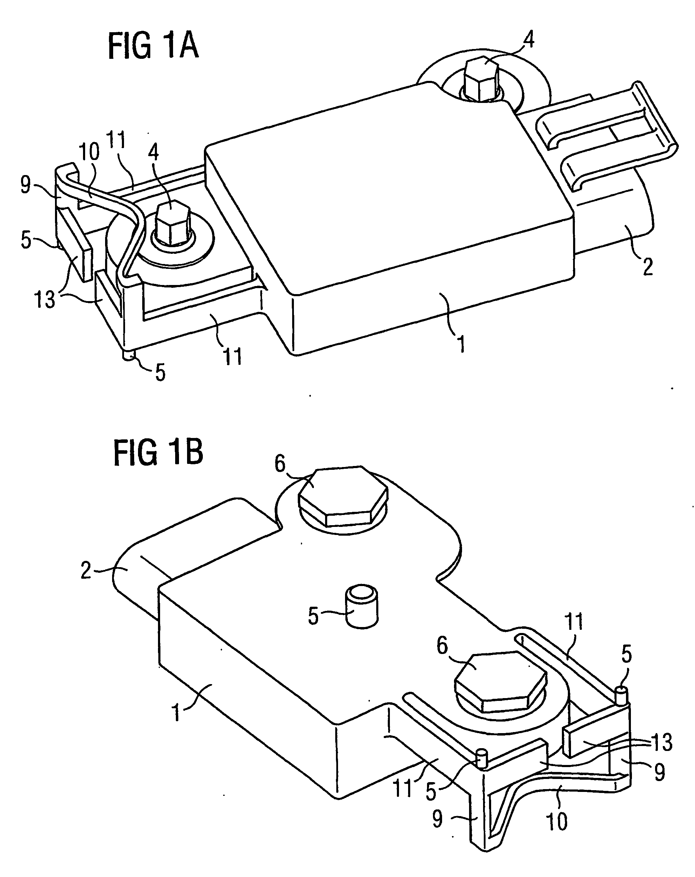

Figur 1a stellt eine Sensorvorrichtung mit einem Gehäuse 1 und mit einem Federelement 9 mit einem Führungselement 5 dar. Das Federelement 9 weist zwei weitgehend parallele Federbalken 11 auf, deren Enden zu einer Richtung als Führungszapfen 5 ausgebildet sind. Diese sind geeignet, als Führungselement 5 in als ein Führungsmittel 12 ausgebildete Aussparungen einer Montageplatte 7 einzugreifen. Als weitgehend parallel wird dabei eine Anordnung bezeichnet, bei der die beiden Federbalken 11 vorzugsweise keinen Winkel zueinander bilden, höchstens jedoch einen Winkel von 15 Grad.

Um die Federbalken 11 vor mechanischer Überbeanspruchung bei der Auslenkung schützen, dient ein weiterer Teil der Federbalken 11 als Federkraftbegrenzer 13.

Die beiden Enden der Federbalken 11 sind über einen elastischen Verbindungssteg 10 miteinander verbunden.

Als vorteilhafte Weiterbildung der Erfindung sind im Ausführungsbeispiel die Federbalken 11 mit den Führungszapfen 5 und dem Verbindungssteg 10 einstückig mit dem Gehäuse 1 der Sensorvorrichtung ausgebildet. Die Sensorvorrichtung besteht deshalb aus weniger Bauteilen, wodurch der Aufwand für die Herstellung und Montage verringert wird.

Weiter sind Befestigungsschrauben 4 als Montagemittel zu sehen. Diese sind geeignet, mit den entsprechenden Gegenschrauben als Montagegegenmittel zusammenzuwirken, so dass der Satellit auf einer Halterung im Kraftfahrzeug befestigt werden kann. Alternative Montagemittel sind Kombinationen aus Befestigungsschrauben und Schraubengewinden oder andere mechanisch feste Verbindungsformen wie Schnappverbindungen, Nietverbindungen, etc... Den nötigen Gegenhalt finden Befestigungsschrauben und Schraubengewinde auf der gegenüberliegenden Seite einer Montageplatte in Form von Montagegegenmitteln, insbesondere Gegenschrauben, Schraubenmuttern beziehungsweise Schraubenköpfen.

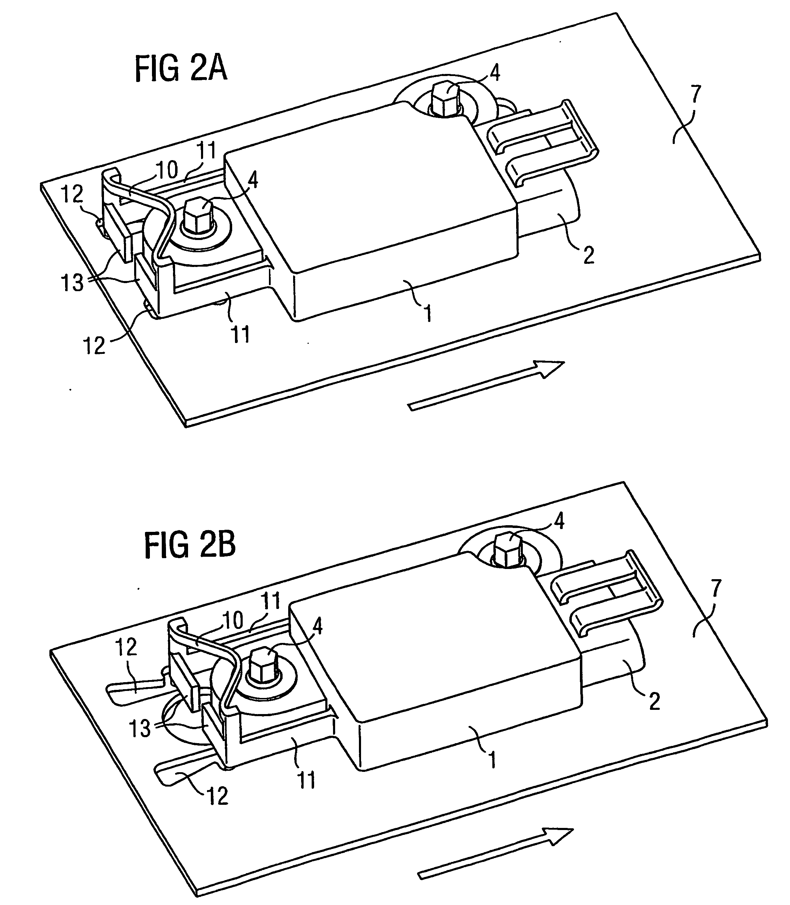

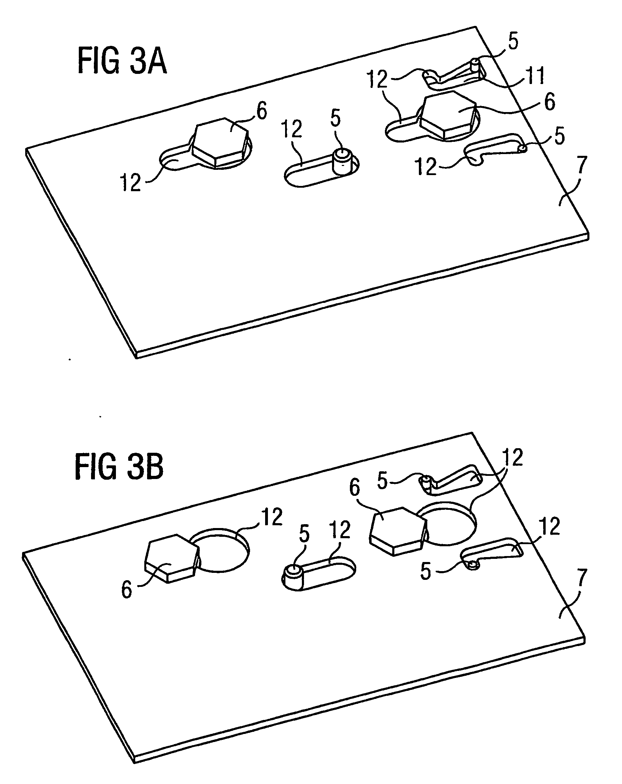

In den Figuren 2a, 2b, 3a und 3b ist ein Airbagsatellit auf einer Montageplatte 7 von der Vorderseite beziehungsweise von der Rückseite dargestellt. Die Rückseite bezeichnet dabei die der Montageplatte zugewandte Seite des Airbagsatelliten. Anhand dieser Figuren wird die Anordnung des Satelliten auf der Montageplatte 7 erläutert:
Nach dem Einsetzen des Satelliten greifen die Führungszapfen 5 in das Führungsmittel 12 der Montageplatte 7 ein (Figur 2a). Danach wird der Satellit in die Montageposition gebracht. Dies kann per Hand oder maschinell erfolgen. Die Bewegung erfolgt in Pfeilrichtung. In dieser Einbauposition werden die Befestigungsschrauben 4 mit Hilfe eines Montagewerkzeuges angezogen (Figur 2b).

Figuren 3a und 3b zeigen dieselben Anordnungen von der Rückseite. Gegenschrauben 6 in Figur 3b als Montagegegenmittel der Befestigungsschrauben 4 aus Figur 2a sind über einer Verjüngung der beiden Führungsmittel 12 derart angeordnet, dass sie festgezogen dem Airbagsatelliten den nötigen Halt bieten können.

Bei der bisher beschriebenen Beschleunigungs- - Sensorvorrichtung (dem Airbagsatelliten) kann das Gehäuse 1 derart ausgestaltet werden, dass der Zugriff mit einem Montagewerkzeug auf die Befestigungsschrauben 4 und das Befestigen des Airbagsatelliten nur in seiner Einbauposition möglich ist. Dies wird durch den elastischen Verbindungssteg 10 erreicht.

Wie im Ausführungsbeispiel nach Figur 2a dargestellt, ist der Verbindungssteg 10 zwischen den auslenkbaren Enden der beiden parallelen Federbalken 11 angeordnet.

In einer Endposition nach Figur 2a ist der Verbindungssteg 10 ausgelenkt. Dadurch ist der Zugriff auf die Befestigungsschraube 4 verhindert, die dem Verbindungssteg 10 am nächsten liegt.

In seiner Ruheposition, dargestellt in Figur 2b, ist der elastische Verbindungssteg nur soweit ausgelenkt, dass der Zugriff mit einem Montagewerkzeug auf die Befestigungsschrauben möglich ist.

Das Gehäuse einer Sensorvorrichtung gemäß der vorliegenden Erfindung wird zumeist aus dem Material Kunststoff hergestellt. Wie jedes Material kann Kunststoff nur bis zu einer maximalen mechanischen Belastung verformt werden, ohne zu brechen. Um beim Ausführungsbeispiel nach den Figuren 1a und 1b den Verbindungssteg 10 und die Federbalken 11 vor zu starker mechanischer Belastung (und insbesondere vor Materialbruch) zu schützen, ist ein Federkraftbegrenzer 13 vorgesehen. Dieser ist in Form von mechanischen Anschlägen beiderseits der Enden der Federbalken 11 ausgestaltet.

Wie im Ausführungsbeispiel gezeigt, ist es vorteilhaft, die Federbalken 11, den Verbindungssteg 10 und den Federkraftbegrenzer 13 einstückig mit dem Gehäuse 1 auszubilden.
Die Sensorvorrichtung besteht dann aus weniger Bauteilen, wodurch sich der Aufwand für die Herstellung und Montage reduziert.

Das Verfahren zur Montage eines Airbagsatelliten wird im Folgenden anhand der Figuren 2a und 2b beschrieben:
Die Sensorvorrichtung wird zuerst mit einem Führungselement, beispielsweise mit den Führungszapfen 5 am Federelement 9, in das Führungsmittel 12 der Montageplatte 7 eingesetzt (vergleiche Figur 2a).
Die Sensorvorrichtung wird dann über die Montageplatte 7 bewegt, wobei die Richtung der Bewegung durch das Führungsmittel 12 vorgegeben ist (Pfeilrichtung in Figur 2a). Dies kann manuell oder automatisiert erfolgen.
Das Führungselement 5 der Sensorvorrichtung rastet in der Einbauposition des Airbagsatelliten im Führungsmittel 12 der Montageplatte 7 ein (siehe Figur 2b).
Danach wird der Airbagsatellit auf der Montageplatte 7 mit einem Montagemittel starr befestigt.

Beim Bewegen des Satelliten verformt sich das Federelement 9 und insbesondere dessen Federbalken 11. In der Einbauposition entspannen sich die Federbalken 11, indem die Führungszapfen 5 im Führungsmittel 12 der Montageplatte 7 einrasten (siehe Figur 2b).

In einem alternativen Verfahren ist ein Federelement an der Montageplatte 7 angeordnet. Das Führungselement 5 des Airbagsatelliten kann dabei starr ausgebildet sein:

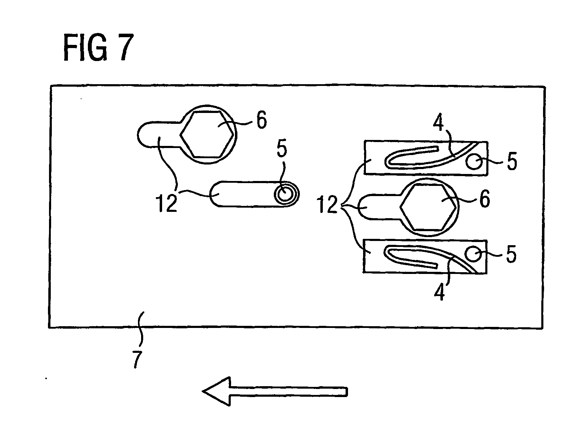

Figur 7 zeigt einen Airbagsatelliten auf einer Montageplatte 7, an der ein Federelement 14 angeordnet ist. Wird der Satellit in Pfeilrichtung bewegt, verformt sich das Federelement 14 bis die Führungszapfen 5 daran vorbeigeführt sind. Der Satellit ist dann in seiner Einbauposition eingerastet.
   Danach wird der Airbagsatellit auf der Montageplatte 7 mit einem Montagemittel starr befestigt.

Bei einer weiteren Ausgestaltung des Verfahrens wird der Zugriff eines Montagewerkzeuges auf das Montagemittel 4 und das Befestigen des Airbagsatelliten auf der Montagelatte 7 nur in der Einbauposition des Airbagsatelliten ermöglicht. Das Prinzip wird anhand der Figuren 2a und 2b erläutert:
Der Verbindungssteg 10 des Federelements 9 der Sensorvorrichtung wird in eine Endposition ausgelenkt (siehe Figur 2a), ruht jedoch in einer Ruheposition (siehe Figur 2b).
Ein Montagewerkzeug kann auf das Montagemittel 4 der Sensorvorrichtung entweder in der Endposition oder der Ruheposition des Federelements 9 zugreifen und den Satelliten auf der Montageplatte 7 starr befestigen.
Die Auslenkung des Federelements 9 in der Endposition muss dabei nicht vollständig beispielsweise bis zum Erreichen eines mechanischen Anschlagpunktes erfolgen. Die Endposition und die Ruheposition des Verbindungssteges 10 ist vielmehr dadurch gekennzeichnet, dass der Zugriff auf das Montagemittel 4 und das Befestigen des Airbagsatelliten auf der Montageplatte 7 entweder ermöglicht oder verhindert wird.

Vorzugsweise verhindert der Verbindungssteg 10 den Zugriff eines Montagewerkzeuges auf das Montagemittel 4 während der gesamten Bewegung des Airbagsatelliten über der Montageplatte 7 in die Einbauposition. Erst in der Einbauposition kann ein Montagewerkzeug dann auf das Montagemittel 4 zugreifen und den Airbagsatelliten auf der Montageplatte 7 starr befestigen.

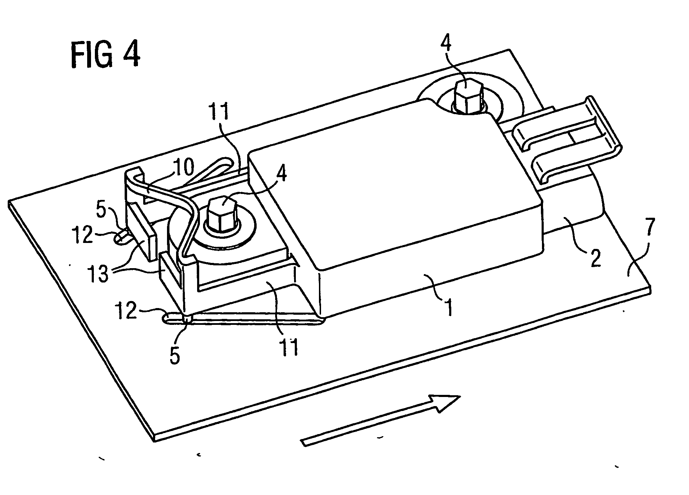

Bei dem erfindungsgemäßen Verfahren muss der Satellit aktiv bewegt werden, entweder maschinell oder per Hand. Alternativ kann das Führungsmittel 12 derart ausgeformt sein, dass die geführte Bewegung des Airbagsatelliten durch die Federkraft des vorgespannten Federelements 9 angetrieben wird. In Figur 4 ist eine mögliche Anordnung dargestellt.
Um den Airbagsatelliten in das Führungsmittel 12 einzusetzen, muss das Federelement 9 mechanisch vorgespannt werden. Das Führungsmittel 12 des Satelliten ist im Vergleich zur Pfeilrichtung schräg angeordnet, so dass eine Entspannung der Federkraft des Federelements 9 und des elastischen Verbindungssteges 10 dadurch erfolgt, dass sich das Federelement 9 zur Einbauposition bewegt. Nach dem Einsetzen des Federelements 9 in das Führungsmittel 12 bewegt sich deshalb der Airbagsatellit ohne weiteres äußeres Zutun in seine Einbauposition bis das Führungselement 5 mit der Montageplatte 7 verrastet. In dieser Position wird der Airbagsatellit befestigt.

Die erfindungsgemäße Sensorvorrichtung und das erfindungsgemäße Verfahren zur Anordnung einer Sensorvorrichtung ist vorliegend nur anhand eines Airbagsatelliten beschrieben. Die Erfindung umfasst jedoch alle Sensorvorrichtungen, die auf einer Montageplatte angeordnet werden, und entsprechende Verfahren zu deren Anordnung.

## Patentansprüche

1. Sensorvorrichtung
- mit einem Gehäuse (1),
- mit einem Federelement (9) aus mindestens zwei weitgehend parallel angeordneten Federbalken (11), das ein Führungselement (5) aufweist zum geführten Bewegen der Sehsorvorrichtung über einer Montageplatte (7), wobei das Führungselement (7) ausgebildet ist zum Zusammenwirken mit einem Führungsmittel (12) der Montageplatte (7), und
- mit einem Montagemittel (4) am Gehäuse (1) zum Anordnen der Sensorvorrichtung auf der Montageplatte (7) mit Hilfe eines Montagewerkzeuges,
**dadurch gekennzeichnet, dass** ein elastischer Verbindungssteg (10) zwischen den beiden Federbalken (11) angeordnet ist, wobei ein Zugriff auf das Montagemittel (4) mit einem Montagewerkzeug in einer ausgelenkten Position der Federbalken (11) durch den Verbindungssteg (10) verhindert ist, wohingegen ein solcher Zugriff in entspannter Position der Federbalken (11) ermöglicht ist, und sich die Federbalken (11) in der Einbauposition der Sensorvorrichtung in ihrer entspannten Position befinden.

2. Sensorvorrichtung nach Anspruch 1,
**dadurch gekennzeichnet, dass** das Federelement (9) einstückig mit dem Gehäuse (1) ausgebildet ist, vorzugsweise auch der Verbindungssteg (10).

3. Sensorvorrichtung nach Anspruch 2,
**dadurch gekennzeichnet, dass** der elastische Verbindungssteg (10) zwischen den auslenkbaren Enden der mindestens zwei Federbalken (11) angeordnet ist.

4. Sensorvorrichtung nach einem der Ansprüche 1 bis 3,
**dadurch gekennzeichnet, dass** das Federelement (9) einen Federkraftbegrenzer (13) aufweist.

5. Sensorvorrichtung nach Anspruch 4,
**dadurch gekennzeichnet, dass** der Federkraftbegrenzer (13) in Form von mechanischen Anschläger beiderseits der Enden der Federbalken (11) ausgebildet ist.

6. Verfahren zum Anordnen einer Sensorvorrichtung gemäß einem der Ansprüche 1 bis 5 auf einer Montageplatte (7), wobei die Sensorvorrichtung ein Federelement (9) aufweist, das ein Führungselement (5) umfasst zum geführten Bewegen der Sensorvorrichtung über der Montageplatte (7), und wobei das Führungselement (7) ausgebildet ist zum Zusammenwirken mit einem Führungsmittel (12) der Montageplatte (7), bei dem die Sensorvorrichtung
- mit Ihrem Führungselement (5) in das Führungsmittel (12) eingesetzt wird,
- entlang des Führungsmittels (12) über die Montageplatte (7) geführt bewegt wird,
- mit ihrem Führungselement (5) in einer Einbauposition der Sensorvorrichtung im Führungsmittel (12) der Montageplatte (7) einrastet und
- in der Einbauposition mit einem Montagemittel (4) auf der Montageplatte (7) befestigt wird,
**dadurch gekennzeichnet, dass** das Federelement (9) in einer ausgelenkten Position einen Zugriff mit einem Montagewerkzeug auf das Montagemittel (4) der Sensorvorrichtung verhindert, wohingegen in einer entspannten Position des Federelements ein solcher Zugriff ermöglicht wird.

7. Verfahren nach Anspruch 6,
**dadurch gekennzeichnet, dass** das Federelement (9) während der geführten Bewegung der Sensorvorrichtung entlang des Führungsmittels (12) derart ausgelenkt wird, dass ein Zugriff mit einem Montagewerkzeug auf das Montagemittel (4) der Sensorvorrichtung verhindert wird, wohingegen ein solcher Zugriff in einer Einbauposition der Sensorvorrichtung ermöglicht wird.

8. Verfahren nach Anspruch 6 oder 7,
**dadurch gekennzeichnet, dass** der Zugriff auf das Montagemittel (4) mit Hilfe eines Montagewerkzeugs durch einen elastischen Verbindungssteg (10) verhindert wird, der das Federelement mit einem weiteren Gehäuseteil verbindet, vorzugsweise die zwei beweglichen Enden eines zweiteilig ausgelegten Federelements (9) in der Form von zwei parallel angeordneten Federbalken (11).

9. Verfahren nach einem der Ansprüche 6 bis 8,
**dadurch gekennzeichnet, dass** allein die Federkraft des Federelements (9) die geführte Bewegung der Sensorvorrichtung über der Montageplatte (7) bewirkt.

## Claims

1. Sensor device
- with a housing (1),
- with a spring element (9) comprising at least two largely parallel spring beams (11), having a guide element (5) for the guided movement of the sensor device over a mounting plate (7), the guide element (7) being configured to operate in combination with a guide means (12) in the mounting plate (7), and
- with a mounting means (4) on the housing (1) to arrange the sensor device on the mounting plate (7) using a mounting tool,
**characterised in that**
an elastic connecting bar (10) is arranged between the two spring beams (11), with access to the mounting means (4) with a mounting tool being prevented by the connecting bar (10) with the spring beams (11) in a deflected position, while such access is allowed when the spring beams (11) are in the released position and the spring beams (11) being in their released position when the sensor device is in the assembly position.

2. Sensor device according to claim 1,
**characterised in that** the spring element (9) is configured as a single piece with the housing (1), preferably also the connecting bar (10).

3. Sensor device according to claim 2,
**characterised in that** the elastic connecting bar (10) is arranged between the deflectable ends of the at least two spring beams (11).

4. Sensor device according to one of claims 1 to 3,
**characterised in that** the spring element (9) has a spring force limiter (13).

5. Sensor device according to claim 4,
**characterised in that** the spring force limiter (13) is configured in the form of mechanical stops at both sides of the ends of the spring beams (11).

6. Method for arranging a sensor device according to one of claims 1 to 5 on a mounting plate (7) with the sensor device having a spring element (9), which comprises a guide element (5) for the guided movement of the sensor device over the mounting plate (7) and with the guide element (7) being configured to operate in combination with a guide means (12) in the mounting plate (7),
wherein the sensor device
- is inserted with its guide element (5) into the guide means (12),
- is moved in a guided fashion along the guide means (12) over the mounting plate (7),
- latches with its guide element (5) in the guide means (12) in the mounting plate (7) when the sensor device is in the assembly position and
- is fixed with a mounting means (4) on the mounting plate (7) in the assembly position,
**characterised in that** in a deflected position the spring element (9) prevents access with a mounting tool to the mounting means (4) of the sensor device, while such access is allowed when the spring element is in the released position.

7. Method according to claim 6,
**characterised in that** during the guided movement of the sensor device along the guide means (12) the spring element (9) is configured such that access with a mounting tool to the mounting means (4) of the sensor device is prevented, while such access is allowed when the sensor device is in the assembly position.

8. Method according to claim 6 or 7,
**characterised in that** access to the mounting means (4) with a mounting tool is prevented by an elastic connecting bar (10), which connects the spring element to a further housing element, preferably the two movable ends of a spring element (9) designed in two parts in the form of two parallel spring beams (11).

9. Method according to one of claims 6 to 8,
**characterised in that** the spring force alone of the spring element (9) brings about the guided movement of the sensor device over the mounting plate (7).

## Revendications

1. Dispositif de détecteur comportant :
- un boîtier (1),
- un élément de ressort (9) composé d'au moins deux branches de ressort (11) disposées sensiblement parallèles, qui présente un élément de guidage (5) pour guider le déplacement du dispositif de détecteur sur une plaque de montage (7), l'élément de guidage (7) étant réalisé pour agir en coordination avec un moyen de guidage (12) de la plaque de montage (7), et
- un moyen de montage (4) sur le boîtier (1) pour disposer le dispositif de détecteur sur la plaque de montage (7) à l'aide d'un outil de montage,
**caractérisé en ce que**
une tige de liaison élastique (10) est disposée entre les deux branches de ressort (11), en empêchant une prise par la tige de liaison (10) sur le moyen de montage (4) avec un outil de montage dans une position écartée des branches de ressort (11), et en permettant, par contre, une telle prise dans la position de détente des branches de ressort (11), et les branches de ressort (11) se trouvant, dans la position d'installation du dispositif de détecteur, dans leur position de détente.

2. Dispositif de détecteur suivant la revendication 1, **caractérisé en ce que** l'élément de ressort (9) est réalisé en une seule pièce avec le boîtier (1), ainsi que, de préférence, la tige de liaison élastique (10).

3. Dispositif de détecteur suivant la revendication 2, **caractérisé en ce que** la tige de liaison élastique (10) est disposée entre les extrémités écartables d'au moins les deux branches de ressort (11).

4. Dispositif de détecteur suivant l'une des revendications 1 à 3, **caractérisé en ce que** l'élément de ressort (9) présente un limiteur de la force de ressort (13).

5. Dispositif de détecteur suivant la revendication 4, **caractérisé en ce que** le limiteur de la force du ressort (13) est réalisé sous la forme de butées mécaniques de chaque côté des extrémités des branches de ressort (11).

6. Procédé pour disposer un dispositif de détecteur suivant l'une des revendications 1 à 5 sur une plaque de montage (7), le dispositif de détecteur présentant un élément de ressort (9) qui comprend un élément de guidage (5) pour le déplacement guidé du dispositif de détecteur sur la plaque de montage (7), et l'élément de guidage (7) étant réalisé pour agir en coordination avec un moyen de guidage (12) de la plaque de montage (7),
dans lequel le dispositif de détecteur,
- avec son élément de guidage (5) est introduit dans le moyen de guidage (12),
- est déplacé le long du moyen de guidage (12) sur la plaque de montage (7),
- avec son élément de guidage (5), est bloqué dans une position d'implantation du dispositif de détecteur dans le moyen de guidage (12) de la plaque de montage (7), et
- est fixé dans la position d'implantation, avec un moyen de montage (4), sur la plaque de montage (7),
**caractérisé en ce que**
l'élément de ressort (9) empêche, dans une position d'écartement, une prise avec un outil de montage sur le moyen de montage (4) du dispositif de détecteur, une telle prise étant, par contre, rendue possible dans une position de détente de l'élément de ressort.

7. Procédé suivant la revendications 6,
**caractérisé en ce que**
l'élément de ressort (9), pendant le déplacement guidé du dispositif de détecteur le long du moyen de guidage (12), est écarté de telle façon que soit empêchée une prise avec un outil de montage sur le moyen de montage (4) du dispositif de détecteur, et que, par contre, une telle prise soit rendue possible dans une position d'implantation du dispositif de détecteur.

8. Procédé suivant la revendication 6 ou la revendication 7, **caractérisé en ce que** l'on empêche la prise sur le moyen de montage (4) à l'aide d'un outil de montage au moyen d'une tige de liaison élastique (10) qui relie, avec une autre pièce du boîtier, l'élément de ressort, de préférence les deux extrémités mobiles d'un élément de ressort (9) réalisé en deux parties sous la forme de deux branches de ressort (11) disposées parallèlement.

9. Procédé suivant l'une des revendications 6 à 8, **caractérisé en ce que** la force du ressort de l'élément de ressort (9) actionne le déplacement guidé du dispositif de détecteur sur la plaque de montage (7).
